# EUROPÄISCHE PATENTSCHRIFT

(11) **EP 3 327 443 B1**
(45) Veröffentlichungstag und Bekanntmachung des Hinweises auf die Patenterteilung: **01.05.2019**
(21) Anmeldenummer: 16200627.4
(22) Anmeldetag: 25.11.2016
(51) Int. Cl.: G01N 35/04, B01L 3/00, B65D 39/00, B67B 1/04, B65D 39/04

(54) **SYSTEM UND VERFAHREN ZUM AUTOMATISCHEN VERSCHLIESSEN VON PROBENGEFÄSSEN**
SYSTEM AND METHOD FOR AUTOMATICALLY CLOSING SAMPLE CONTAINERS
SYSTÈME ET PROCÉDÉ DE FERMETURE AUTOMATIQUE DE TUBES D'ESSAI

(43) Veröffentlichungstag der Anmeldung: 30.05.2018
(73) Patentinhaber: GLP systems GmbH, 21079 Hamburg (DE)
(72) Erfinder: HECHT, Robert, 82418 Seehausen (DE); EVGENY, Gerber, 21031 Hamburg (DE)
(74) Vertreter: Raffay & Fleck

(56) Entgegenhaltungen:
- EP-A1- 2 801 828
- EP-A1- 3 070 480
- US-A- 1 755 493

## Beschreibung

Die Erfindung betrifft einerseits ein System und andererseits auch ein Verfahren zum automatischen Verschließen von Probengefäßen, insbesondere von Probengefäßen mit medizinischen Laborproben.

In der Laboranalysetechnik ist es üblich, dass dezentral gewonnene Laborproben in eigens dafür vorgesehenen Probengefäßen an ein zentrales Analyselabor übermittelt werden. Um die Proben nicht zu verunreinigen oder durch Verschütten zu verlieren, werden nach der Entnahme und dem Abfüllen der Proben in die Probengefäße letztere verschlossen, in der Regel mit passenden Verschlusskappen, die die Öffnungen der Probengefäße abdichten. Zum Beispiel im Bereich medizinischer Laborproben geschieht die Probenentnahme, zum Beispiel die Entnahme von Blutproben, typischerweise in Arztpraxen oder Krankenhäusern. Diese medizinischen Proben werden dabei typischerweise in röhrchenförmige Probengefäße aus Kunststoff, seltener noch aus Glas, abgefüllt, die Probengefäße werden verschlossen und sodann an ein medizinisches Analyselabor übermittelt.

In dem Analyselabor werden die entsprechenden Proben heutzutage weit überwiegend vollständig automatisiert verarbeitet. Je nachdem, welche Parameter in Bezug auf die Laborprobe zu bestimmen sind, werden eine oder mehrere Messungen mit einem oder auch mehreren automatisierten Messgeräten durchgeführt. Auch der Transport der Laborproben zu und zwischen den Messgeräten erfolgt heutzutage überwiegend vollautomatisch. Damit die in den zunächst verschlossenen Probengefäßen enthaltenen Proben analysiert und untersucht werden können, ist zunächst der Verschluss, der Deckel bzw. die Kappe, von dem jeweiligen Probengefäß zu entfernen. Für dieses Öffnen der Probengefäße, in der Laborfachsprache auch als "De-Capping" bezeichnet, wird häufig ebenfalls ein automatisierter Prozess eingesetzt. Hierbei kann zum Beispiel eine Vorrichtung zum Einsatz kommen, wie sie in der DE 199 11 349 A1 beschrieben ist.

Nachdem die Proben in dem Analyselabor sämtliche vorgegebenen Untersuchungen durchlaufen haben, müssen sie in der Regel noch für einen vorgegebenen Zeitraum verwahrt werden, um mögliche Nachuntersuchungen, zum Beispiel zum Verifizieren eines ermittelten Wertes oder auch zur Ermittlung weiterer, von dem Auftraggeber nachgeforderter Analysewerte, verwahrt werden. Eine solche Verwahrung der Proben erfolgt dabei typischerweise in den originären Probengefäßen, die in einem Probenarchiv aufbewahrt werden. Handelt es sich bei den Laborproben um empfindliche oder verderbliche Proben, so kann ein solches Probenarchiv zum Beispiel gekühlt oder hinsichtlich der Aufbewahrungsbedingungen in anderer Weise kontrolliert sein.

Damit während der Lagerung die Proben nicht kontaminiert oder in anderer Weise beeinträchtigt werden, werden die Probengefäße vor der Einlagerung im Probenarchiv erneut mit einem Verschluss, einer Kappe oder einem Deckel, dichtend verschlossen, ein Vorgang, der in der Laborfachsprache auch als "Re-Capping" bezeichnet wird. Auch dieser Vorgang wird vorzugsweise automatisiert durchgeführt, wobei es unterschiedliche Ansätze gibt. Teilweise werden für das Verschließen der Probengefäße diejenigen Verschlüsse verwendet, mit denen das Probengefäß originär bei Ankunft im Analyselabor verschlossen war. Ein solches Vorgehen ist allerdings logistisch aufwändig, da die Zuordnung des Deckels zu dem Probengefäß über den gesamten Prozess aufrechterhalten werden muss. Auch ist das automatische Handling der Probendeckel, mit denen die Probengefäße ursprünglich verschlossen waren, vergleichsweise kompliziert. Denn die Verschlüsse der Probengefäße sind unterschiedlicher Natur, so kann es sich hierbei um Schraubstopfen, Pressstopfen bzw. Steckstopfen und andere Formen von Verschlüssen handeln.

In der CN 201432271 Y ist eine Vorrichtung beschrieben, mit der automatisch Blutprobengefäße verschlossen und mit Stopfen versehen werden können. Bei dieser Vorrichtung wird eine Reihe von Gefäßen einer großräumigen Einheit zugeführt, die über einen Fördersystem zugeführte Stopfen zum Verschließen der Gefäße auf die Öffnungen und in diese hinein presst. Problematisch bei dieser vorbekannten Vorrichtung ist, dass sie vergleichsweise viel Raum einnimmt, dass insbesondere das Management und Handling der Verschlusskappen platzraubend ist und dass mit dieser Vorrichtung nur Probengefäße einer einheitlichen Dimensionierung verschlossen werden können. Im Alltag eines Analyselabors werden allerdings in der Regel ganz unterschiedliche Probengefäße, in einem medizinischen Analyselabor zum Beispiel röhrchenförmige Probengefäße, gehandhabt, die insbesondere unterschiedliche, wiederzuverschließende Entnahmeöffnungen, insbesondere solche mit unterschiedlichen Durchmessern, aufweisen. Mit dem vorbekannten System ist das Handhaben eines Wiederverschließens derart mannigfaltiger Probengefäße nicht automatisiert möglich.

Weitere Vorrichtungen zum Verschließen von Probengefäßen sind aus der EP 2801828 A1 und EP 3070480 A1 bekannt.

Entsprechend ist es Aufgabe der Erfindung, hier ein System zum automatischen Verschließen von Probengefäßen, insbesondere von Probengefäßen mit medizinischen Laborproben, und auch ein diesbezügliches Verfahren, anzugeben, mit welchem in einer raumsparenden Weise ein automatisiertes Verschließen von Probengefäßen, vorzugsweise von unterschiedlicher Bauform, möglich ist, insbesondere ein sicheres Verschließen für ein anschließendes Archivieren der Proben. Diese Aufgabe wird hinsichtlich eines Systems gelöst mit einem solchen, wie es im Patentanspruch 1 benannt ist. Vorteilhafte Weiterbildungen eines solchen Systems sind in den abhängigen Ansprüchen 2 bis 11 bezeichnet. In Patentanspruch 12 ist ein erfindungsgemäßes Verfahren angegeben, welches diese Aufgabe löst. Vorteilhafte Weiterbildungen dieses Verfahrens geben die Ansprüche 13 und 14 an.

Das erfindungsgemäße System zum automatischen Verschließen von Probengefäßen, insbesondere von Probengefäße mit medizinischen Laborproben, zeichnet sich nun durch die folgenden, erfindungswesentlichen Bestandteile aus:
Es enthält eine Mehrzahl von gleich geformten, stapelbaren Verschlusskappen, die eine konvex geformte Außenseite und eine konkav geformte Innenseite aufweisen. Die Verschlusskappen sind derart in wenigstens einem Verschlusskappenstapel gestapelt, dass eine obere Verschlusskappe in dem Verschlusskappenstapel mit ihrer konvex geformten Außenseite an der konkav geformten Innenseite einer in dem Verschlusskappenstapel unmittelbar darunter liegenden unteren Verschlusskappe angreift.

Es enthält ferner einen Verschlussgreifer zum Erfassen einer obersten Verschlusskappe aus dem wenigstens einen Verschlusskappenstapel, zum Überführen der ergriffenen Verschlusskappe zu dem zu verschließenden Probengefäß und zum Einbringen der ergriffenen Verschlusskappe in eine Öffnung des Probengefäßes zum dichten Verschließen derselben. Der Verschlussgreifer weist dabei weiterhin ein Zentrierstück auf, das in eine Verschlusskappe derart einführbar ist, dass es an der konkav geformten Innenseite der Verschlusskappe anliegt.

Die Ausbildung der Verschlusskappe in einer stapelbaren Weise mit konvex geformter Außenseite und konkav geformter Innenseite und das Zusammenfassen der Verschlusskappen zu einem Verschlusskappenstapel, führt zu einer besonders raumsparenden Bevorratung von Verschlusskappen, die mit Hilfe des Verschlussgreifers zum Verschließen von Probengefäßen ergriffen, zu diesen überführt und in deren jeweilige Öffnung zum dichten Verschließen derselben eingebracht werden können. Dadurch ist eine platzsparende Bauform ermöglicht, und es können Verschlusskappen in großer Zahl bevorratet und ohne Unterbrechung des Betriebs automatisch verarbeitet werden.

Bei den Verschlusskappen handelt es sich insbesondere nicht um die originären Verschlusskappen, mit denen die Probengefäße mit den darin enthaltenen Proben verschlossen waren, als sie dem Analyselabor zugeführt worden sind. Vielmehr sind hier gesonderte Verschlusskappen vorgehalten, die speziell für das Wiederverschließen der Probengefäße vorgehalten werden. Diese Maßnahme führt gerade dazu, dass die Verschlusskappen in der wie bezeichneten, stapelbaren Weise ausgebildet werden können, so dass sie platzsparend zu bevorraten sind. Die stapelbare Ausbildung mit insbesondere der konkav geformten Innenseite der Verschlusskappe ermöglicht weiterhin das Zusammenspiel mit dem Zentrierstück des Verschlussgreifers, mit dessen Hilfe, wenn es an der konkaven Innenseite einer Verschlusskappe anliegend in diese hineinragt, die Verschlusskappe in die zu verschließende Öffnung des Probengefäße zum sicheren Verschließen und Abdichten hineingedrückt werden kann. Durch diese automatisierte und sicher geführte Vorgehensweise beim Verschließen der Probengefäße wird zudem verhindert, dass die Umgebung, insbesondere das System zum automatischen Verschließen des Probengefäßes, mit dem Inhalt des Probengefäßes, also der eigentlichen Probe, in Kontakt kommt und kontaminiert wird. Auch wird eine Beschädigung der Probengefäße beim Verschließen mit der Verschlusskappe verhindert.

Mit Vorteil können die Verschlusskappen aus einem Folienmaterial durch Umformen, insbesondere Strecken oder Tiefziehen, gebildet sein. Bei dem Folienmaterial kann es sich insbesondere um eine Kunststofffolie handeln. Die Materialstärke dieser Folie, also deren Dicke, ist dabei mit Vorteil so bemessen, dass die daraus geformte Verschlusskappe ausreichend formstabil ist bei gleichzeitig möglichst geringer Wandstärke. Eine geringe Wandstärke erlaubt ein noch kompakteres Stapeln der Verschlusskappen in dem Verschlusskappenstapel und führt allgemein zu einem geringeren Materialverbrauch und damit zu geringeren Kosten der in der Praxis als Massenware eingesetzten Verschlusskappe. Sie führt auch zu einer gewissen Flexibilität der so gebildeten Verschlusskappen, was für das dichte Verschließen von Öffnungen von Probengefäßen ebenfalls von Vorteil ist.

Gemäß einer vorteilhaften Weiterbildung des erfindungsgemäßen Systems kann die Verschlusskappe an einem ein offenes Ende der konkaven Innenseite abschließenden Rand einen nach außen weisenden Kragen aufweisen und kann das Zentrierstück eine Anschlagfläche aufweisen, an der, wenn das Zentrierstück in die konkave Innenseite der Verschlusskappe eingeführt wird, der Kragen anliegt. Diese Lösung gibt einerseits einen die Position der Verschlusskappe auf dem Zentrierstück begrenzenden Anschlag, erlaubt andererseits eine gute Kraftübertragung von dem Zentrierstück auf die Verschlusskappe, wenn letztere mit dem Verschlussgreifer zum dichten Verschließen des Probengefäßes in dessen Öffnung gepresst wird.

Der Verschlussgreifer kann gemäß einer weiteren vorteilhaften Weiterbildung der Erfindung wenigstens ein zwischen einer Freigabeposition und einer Halteposition, in der es eine ergriffene Verschlusskappe von der Außenseite her gegen das Zentrierstück drückt und verklemmt, bewegbares Klemmteil aufweisen. Mit einem solchen Klemmteil kann der Verschlussgreifer eine auf das Zentrierstück geführte Verschlusskappe sicher halten und verklemmen, um sie dann endgültig von dem Verschlusskappenstapel zu lösen und zu dem zu verschließenden Probengefäß zu führen und dort in die zu verschließende Öffnung einzubringen. Besonders vorteilhaft weist der Verschlussgreifer nicht lediglich eine, sondern zwei einander diametral gegenüberliegende Klemmteile auf. Dadurch wird ein symmetrisches und sicheres Ergreifen und Halten einer Verschlusskappe gewährleistet. Die Klemmteile können z.B. in Form von Klemmbacken realisiert sein.

Das erfindungsgemäße System kann ferner mit Vorteil Haltemittel zum fixierenden Halten des Probengefäßes in einer Arbeitsposition aufweisen. Mit einer Arbeitsposition ist hier diejenige Position in dem System gemeint, in der der Verschlussgreifer die Verschlusskappe zuführt und zum Verschließen der Öffnung des Probengefäßes in diese einsetzt und eindrückt. Die Haltemittel, zum Beispiel Haltebalken, Haltegreifer oder dergleichen, dienen dabei dazu, das Probengefäß sicher zu halten, so dass es nicht etwa beim Prozess des Einsetzens der Verschlusskappe in die zu verschließende Öffnung zu kippen oder umzufallen droht oder auch nur die Position verändert. Die Haltemittel können dabei zugleich auch eine ausrichtende Wirkung aufbringen, so dass das Probengefäße für ein Zuführen des Verschlussgreifers mit der daran angeordneten Verschlusskappe korrekt orientiert ist.

Damit das System ohne die Notwendigkeit eines Eingriffs von außen möglichst lange arbeiten und möglichst viele Probengefäße automatisch verschließen kann, kann dieses ein Magazin aufweisen, in welchem mindestens zwei Verschlusskappenstapel aufgenommen sind. Dieses Magazin ist dann in einer solchen Weise verlagerbar, dass wählbar einer der in dem Magazin vorhandenen Verschlusskappenstapel in eine Zuführposition verbringbar ist, aus der heraus eine oberste Verschlusskappe des in die Zuführposition verbrachten Verschlusskappenstapels in einen Arbeitsbereich des Verschlussgreifers verbringbar ist. Ein solches Magazin kann zum Beispiel nach Art eines Revolvermagazins, also als um eine zentrale Drehachse rotierbarer, zylinderförmiger Körper mit mehreren um die zentrale Drehachse herum verteilt angeordneten Aufnahmeschächten für Verschlusskappenstapel, ausgebildet sein.

Weist das System ein wenigstens zwei Verschlusskappenstapel fassendes Magazin auf, so kann es weiterhin und mit Vorteil ein vertikales Zuführrohr aufweisen, welches ein erstes und ein zweites Ende aufweist und mit einem ersten, unteren Ende im Bereich des Magazins so angeordnet ist, dass ein durch Verlagern des Magazins entsprechend positionierter Verschlusskappenstapel in das Zuführrohr eingebracht werden kann. Mit einem zweiten Ende mündet dieses Zuführrohr dann in dem Arbeitsbereich des Verschlussgreifers. Das Zuführrohr bildet also einen Abschnitt einer Förderstrecke, über die ein Verschlusskappenstapel hier in vertikaler Richtung ausgehend von dem Magazin in Richtung der Arbeitsposition des Verschlussgreifers gefördert werden kann, in der leztgenannter eine oberste Verschlusskappe des Verschlusskappenstapels erfassen und mitnehmen kann. Diese Bauweise ermöglicht eine vertikale Trennung zwischen einem Magazinbereich, in dem die Verschlusskappen stapelweise bevorratet werden, und dem Arbeitsbereich des Verschlussgreifers. Dies kommt wiederum einer kompakten Bauweise des gesamten Systems, bzw. einer in diesem System integrierten Vorrichtung, zugute.

Weiterhin kann das System mit Vorteil Hubmittel zum vertikalen Anheben des wenigstens einen Verschlusskappenstapels aufweisen. Solche Hubmittel gewährleisten, dass auch bei abnehmender Stapelhöhe eine oberste Verschlusskappe des Verschlusskappenstapels stets in übereinstimmender vertikaler Position für den Verschlussgreifer abholbereit positioniert ist. Solche Hubmittel können zum Beispiel in Form eines Dorns oder einer Stange oder eines anderen von unten an eine unterste Verschlusskappe in dem Verschlusskappenstapel angreifenden Hubstücks realisiert sein, das in vertikaler Richtung aufwärts verlagerbar ist und darüber den Verschlusskappenstapel in einer Führung nach oben drückt. Mit einem solchen Hubmittel können auch Verschlusskappenstapel aus einem Magazin in das Zuführrohr überführt werden.

Mit Vorteil können in dem System weiterhin Vereinzelungsmittel zum Vereinzeln von Verschlusskappen, insbesondere einer obersten Verschlusskappe, von den restlichen Verschlusskappen des Verschlusskappenstapels, vorgesehen sein. Eine solche Vereinzelung von Verschlusskappen aus dem Verschlusskappenstapel, insbesondere der obersten Verschlusskappe des Verschlusskappenstapels, erleichtert es, einzelne Verschlusskappen mit dem Verschlussgreifer zu erfassen und für ein Verschließen des Probengefäßes weiter zu handhaben.

Mit besonderem Vorteil sind bei dem erfindungsgemäßen System die Verschlusskappen ausgehend von einem ersten, hinteren Ende hin zu einem zweiten, vorderen Ende, welches vordere Ende beim Verschließen des Probengefäßes in die zu verschließende Öffnung eingeführt wird, mit einem sich, insbesondere gestuft, verjüngenden Durchmesser gebildet. Ist dieser Durchmesser gestuft verjüngt, kann er insbesondere in unterschiedlichen stufenartig angeordneten Zylinderabschnitten gebildet sein. Eine wie vorstehend beschriebene Ausgestaltung macht die Verschlusskappen für Öffnungen unterschiedlichen Durchmessers zum Verschließen derselben geeignet. Ist der Öffnungsdurchmesser gering, so kommt ein dem vorderen Ende zugewandter Bereich der Verschlusskappe mit geringem Durchmesser mit der Öffnung in Eingriff, ist der Durchmesser größer, wird die Verschlusskappe weiter in die Öffnung einzudrücken sein, bis ein dem hinteren Ende näher gelegener Abschnitt mit größerem Durchmesser an der die Öffnung umgebenden Wand angreift, so die Öffnung dichtend verschließt.

Mit der Erfindung wird, wie bereits erwähnt, weiterhin ein Verfahren zum automatischen Verschließen von Probengefäßen, insbesondere von Probengefäßen mit medizinischen Laborproben, angegeben, welches folgende Schritte aufweist:
- Bereitstellen wenigstens eines aus einer Mehrzahl von gleichgeformten, stapelbaren Verschlusskappen, die eine konvex geformte Außenseite und eine konkav geformte Innenseite aufweisen, gebildeten Verschlusskappenstapels, wobei in dem Verschlusskappenstapel eine obere Verschlusskappe mit ihrer konvex geformten Außenseite an der konkav geformten Innenseite einer unmittelbar darunter liegenden unteren Verschlusskappe angreift;
- Erfassen einer obersten Verschlusskappe des Verschlusskappenstapels mit einem ein Zentrierstück aufweisenden Verschlussgreifer, wobei das Zentrierstück in die konkav geformte Innenseite der obersten Verschlusskappe eingeführt wird, bis sie an der Innenseite, insbesondere über deren gesamten Umfang, anliegt;
- Überführen der ergriffenen Verschlusskappe von dem Verschlusskappenstapel zu dem zu verschließenden Probengefäß mit dem Verschlussgreifer;
- Einführen der Verschlusskappe in die und Festlegen der Verschlusskappe in der zu verschließenden Öffnung des Probengefäßes, wobei die Verschlusskappe mit dem Zentrierstück in die Öffnung eingedrückt wird;
- Lösen des Verschlussgreifers von der in der Öffnung des Probengefäßes platzierten Verschlusskappe.

Dieses Verfahren wird insbesondere mit dem erfindungsgemäßen System ausgeführt und erlaubt ein automatisiertes Verschließen von Probengefäßen mit einem System bzw. einer Vorrichtung in kompakter Anordnung.

Mit Vorteil kann bei dem Verfahren der Verschlusskappenstapel angehoben werden, bis die oberste Verschlusskappe in dem Verschlusskappenstapel in einer Übergabeposition in einem Arbeitsbereich des Verschlussgreifers angeordnet ist. Diese Übergabeposition kann hinsichtlich der vertikalen und horizontalen Lage exakt definiert sein, so dass die oberste Verschlusskappe des Verschlusskappenstapels stets in dieser Position zu liegen kommt, wenn der Verschlusskappenstapel entsprechend angehoben wird. Dies ermöglicht eine exakte und einfache Übergabe der obersten Verschlusskappe aus dem Verschlusskappenstapel an den Verschlussgreifer, der diese dann exakt ausgerichtet ergriffenen zu dem zu verschließenden Probengefäße überführen und mit dieser das Probengefäße verschließen kann.

Mit Vorteil wird bei dem erfindungsgemäßen Verfahren die oberste Verschlusskappe des Verschlusskappenstapels vor dem Ergreifen mit dem Verschlussgreifer von dem Verschlusskappenstapel gelöst und vereinzelt. So kann mit dem Verschlussgreifer die bereits vereinzelte Verschlusskappe ergriffen werden, ohne dass der Verschlussgreifer selbst eine entsprechende Kraft zum Vereinzeln der Verschlusskappe aufbringen muss, was zu der Gefahr führen würde, dass die Verschlusskappe nicht in exakter Position an der Verschlusskappe anliegt, sondern verrutscht oder verkantet und damit nicht mehr für ein exaktes Verschließen des Probengefäße korrekt positioniert wäre.

Weitere Merkmale und Vorteile der Erfindung ergeben sich aus der nachfolgenden Beschreibung eines Ausführungsbeispiels der Erfindung. Dabei zeigen:
- Fig. 1: einen Längsschnitt durch eine in einem Ausführungsbeispiel des erfindungsgemäßen Systems verwendete Verschlusskappe;
- Fig. 2: einen Längsschnitt durch ein mit einer Verschlusskappe gemäß Fig. 1 verschlossenes, hier röhrchenförmiges, Probengefäß;
- Fig. 3: einen Ausschnitt einer Verschließvorrichtung mit einem zu dem Ausführungsbeispiel des erfindungsgemäßen Systems gehörigen Verschlussgreifer zum Ergreifen und Handhaben von Verschlusskappen gemäß Fig. 1;
- Fig. 4: eine Darstellung eines Ausschnitts der Verschließvorrichtung mit dem Verschlussgreifer nach Fig. 3 im Längsschnitt, wie er an einer obersten Verschlusskappe eines in dem erfindungsgemäßen System durch Ineinanderstecken mehrerer gleicher Verschlusskappen nach Fig. 1 gebildeten Verschlusskappenstapels an- und mit einem Zentrierstück in diese eingreift;
- Fig. 5: eine der Fig. 4 vergleichbare Darstellung mit dem Verschlussgreifer, wie er die obersten Verschlusskappe des Verschlusskappenstapels ergriffen und von dem Verschlusskappenstapel abgehoben hat;
- Fig. 6: eine Darstellung eines anderen Ausschnitts der Verschließvorrichtung mit dem erfindungsgemäßen System, in dem ein Magazin für Verschlusskappenstapel und ein Hubmittel zum Anheben eines Verschlusskappenstapels aus dem Magazin und in ein Zuführrohr dargestellt ist;
- Fig. 7: in einem zu dem in Fig. 6 gezeigten Ausschnitt ähnlichen Ausschnitt noch einmal das Magazin, hier mit einer Bestückung mit mehreren Verschlusskappenstapeln;
- Fig. 8: in einem vergrößerten Ausschnitt das untere Ende eines in dem Zuführrohr aufgenommenen Verschlusskappenstapels;
- Fig. 9: in einem vergrößerten Ausschnitt das obere Ende eines in dem Zuführrohr aufgenommenen Verschlusskappenstapels;
- Fig. 10: eine Darstellung eines Ausschnitts der mit dem erfindungsgemäßen System ausgestatteten Verschließvorrichtung mit einer Mehrzahl von darin angeordneten, jeweils mit mehreren Verschlusskappenstapeln bestückten Magazinen und
- Fig. 11: a bis e einen Ausschnitt der Verschließvorrichtung mit dem Verschlussgreifer und einem in der Verschließvorrichtung befindlichen Probengefäß zur Darstellung des erfindungsgemäßen Arbeitsablaufes beim Verschließen des Probengefäßes mit einer Verschlusskappe des erfindungsgemäßen Systems.

Nachstehend wird anhand der Figuren ein mögliches Ausführungsbeispiel eines erfindungsgemäßen Systems sowie auch eines erfindungsgemäßen Verfahrens zum automatischen Verschließen von Probengefäßen erläutert. Das erfindungsgemäße System ist dabei in einer Verschließvorrichtung verwirklicht, zu der in den Figuren solche Ausschnitte dargestellt sind, die für das erfindungsgemäße System und dessen Betrieb wichtig sind.

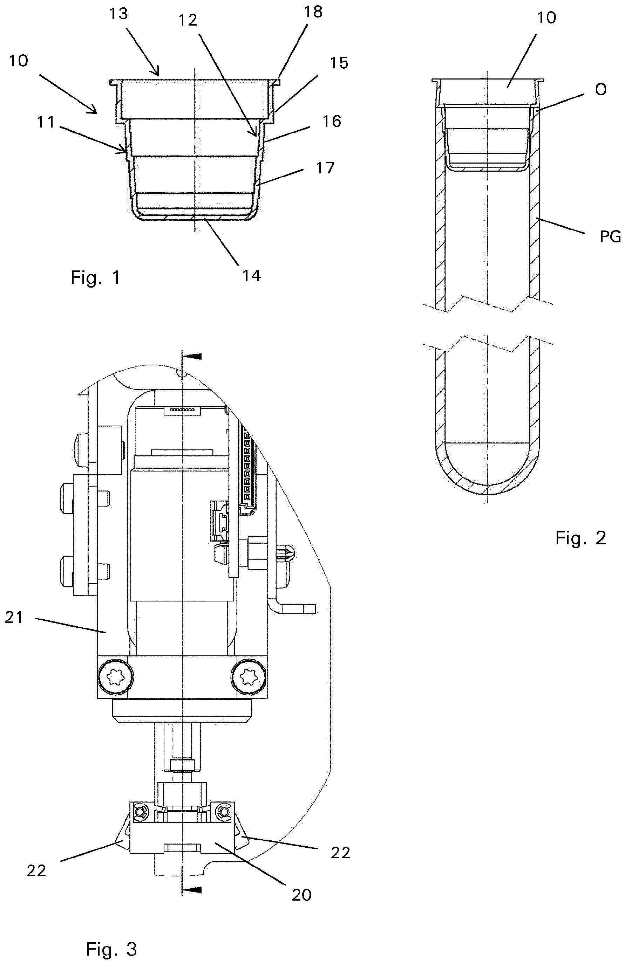

In Figur 1 ist zunächst eine Verschlusskappe 10 gezeigt, die Bestandteil des erfindungsgemäßen Systems ist. Die Verschlusskappe 10 ist stapelbar ausgebildet mit einer konvex geformten Außenseite 11 und einer konkav geformten Innenseite 12. An einem hinteren Ende 13 ist die Verschlusskappe 10 offen gestaltet, d.h. hier kann eine weitere gleichgeformte Verschlusskappe 10 mit ihrer konvex geformten Außenseite 11 so eingestellt werden, dass sie an der konkav geformten Innenseite 12 der gezeigten Verschlusskappe 10 anliegt. An einem vorderen Ende 14 ist die Verschlusskappe 10 durch einen Boden verschlossen.

Die Verschlusskappe 10 ist aus einem dünnwandigen Material bestehend. Dies kann insbesondere ein Folienmaterial, wie speziell eine Kunststofffolie sein, wobei die Verschlusskappe 10 dann insbesondere durch Umformen aus einem entsprechenden ebenen Folienabschnitt gebildet ist, zum Beispiel durch Tiefziehen. Von dem hinteren Ende 13 bis zum vorderen Ende 14 verjüngt sich der Durchmesser der Verschlusskappe 10, wobei dies hier stufenartig in drei gröberen Stufen 15, 16 und 17 erfolgt, die jeweils wiederum in kleinere Feinstufen (in der Figur nicht mehr mit Bezugszeichen beziffert, gleichwohl erkennbar) unterteilt sind. Dabei dient die am vorderen Ende 14 gelegene, vom Durchmesser kleinste Stufe einer Zentrierung der Verschlusskappe 10 beim Einsetzen in eine zu verschließende Öffnung eines Probengefäßes. Am hinteren Ende 13 verläuft um die dort zur Innenseite 12 hin gebildete Öffnung ein umlaufender Kragen 18.

In Figur 2 ist dargestellt, wie eine Verschlusskappe 10 gemäß Figur 1 in einer Öffnung O eines, hier röhrchenförmigen, Probengefäße PG sitzt und diese Öffnung O dicht verschließt. Für das dichte Verschließen dieser Öffnung O eignet sich die Verschlusskappe 10 insbesondere deshalb, da sie durch ihre geringe Wandstärke ein Maß an Flexibilität aufweist und unter Spannung so in die Öffnung O eingesetzt werden kann, dass sie sich etwas verformt und dadurch einen Druck auf die Innenwand des Probengefäßes PG ausübt. Auch die gestufte Ausgestaltung der Außenseite 11 der Verschlusskappe 10 unterstützt hierbei. Zudem führt die gestufte Ausgestaltung der Außenseite 11 bzw. des Durchmessers der Verschlusskappe 10 dazu, dass Probengefäße PG mit unterschiedlichen Öffnungsdurchmessern mit ein und derselben Verschlusskappe 10 verschlossen werden können. Das in Figur 2 gezeigt Probengefäß PG kann insbesondere ein Probenröhrchen für medizinische Laborproben sein, zum Beispiel für Blutproben oder dergleichen.

In Figur 3 ist ein weiteres wesentliches Element des erfindungsgemäßen Systems gezeigt, nämlich ein Verschlussgreifer 20. Dieser ist an einem Greiferarm 21 angeordnet, der in vertikaler und auch in horizontaler Richtung linear bewegbar ist, wie nachstehend noch näher erläutert werden wird. Der Verschlussgreifer 20 weist, wie Figur 3 bereits erkennen lässt, zwei diametral einander gegenüberliegende Klemmbacken 22 auf, die in der in Figur 3 gezeigten Position in einer Freigabestellung befindlich sind.

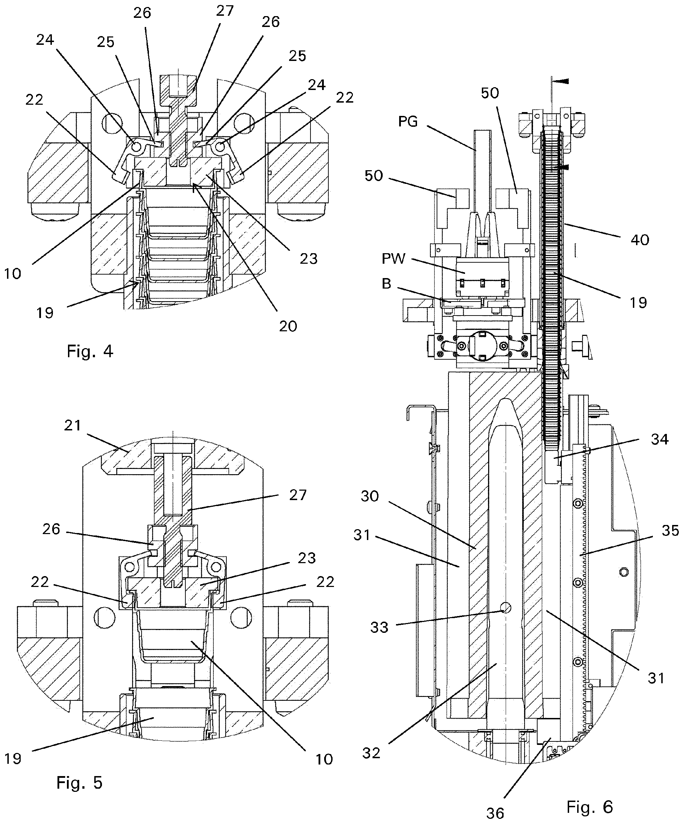

Genauer lässt sich der Aufbau des Verschlussgreifers 20 in Figur 4 erkennen. Dort ist dieses Element in einem Längsschnitt dargestellt. Zu erkennen ist hier, dass im Zentrum des Verschlussgreifers 20 ein Zentrierstück 23 angeordnet ist, dass an einem, in der Figur oben dargestellten, Ende mit einem umlaufenden Rand begrenzt ist. Zu erkennen ist hier auch, dass die Klemmbacken 22 jeweils auf einer Achse 24 drehbar gelagert sind und mit einem jenseits der Achse 24 liegenden Ende 25 in einem in einem Zugstück 26 ausgebildeten Schlitz festliegen. Das Zugstück 26 ist auf einer Zugstange 27 angeordnet und an dieser festgelegt. In der in Figur 4 gezeigten Position ist der Verschlussgreifer 20 mit dem Zentrierstück 23 in eine oberste Verschlusskappe 10 eines Verschlusskappenstapels 19, in dem die gleich geformten Verschlusskappen 10 in erfindungsgemäßer Weise ineinander gestapelt sind, eingetaucht und liegt mit einem Umfang an der Innenseite dieser Verschlusskappe 10 an. Dabei stößt der umlaufende Kragen 18 (in der Figur nicht mit einem Bezugszeichen bezeichnet) an dem umlaufenden Rand am Rande des Zentrierstücks 23 an, so dass hier ein Anschlag gebildet ist. In dieser Position kann nun durch Bewegen der Zugstange 27 das Zugstück 26 von dem Zentrierstück 23 fortgezogen werden, wodurch die Klemmbacken 22 rotiert und gegen das Zentrierstück 23, genauer gegen die Außenseite der auf dem Zentrierstück 23 liegenden Verschlusskappe 10, gedrückt werden. So werden die Verschlusskappe 10 so gehalten und verklemmt wird. In Figur 5 ist hier bereits gezeigt, wie die Verschlusskappe 10 von dem Verschlusskappenstapel 19 mithilfe einer Bewegung des Greiferarms 21 abgehoben wird.

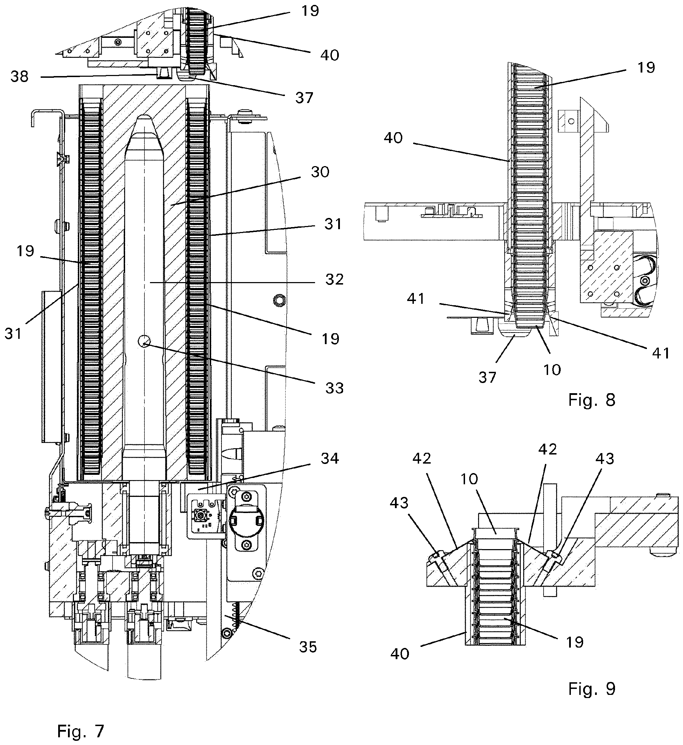

In Figur 6 ist eine in der Verschließvorrichtung unterhalb einer Arbeitsposition des Verschlussgreifers 20 liegende Anordnung zu erkennen. Zu erkennen ist hier zunächst einmal ein Magazin 30, das nach der Art eines Trommelmagazins gebildet ist. Das Magazin 30 enthält entlang eines Umfanges verteilt um eine Mittelachse angeordnet mehrere, zum Beispiel sechs oder acht, Schächte 31, in denen Verschlusskappenstapel 19 aufgenommen werden können. Das Magazin 30 sitzt dabei auf einem Dorn 32, der in eine zentrale Öffnung des Magazins hineinragt. Der Dorn 32 hat einen quer durch diesen geführten und überstehenden Mitnehmerstift 33, der mit dem Magazin formschlüssig in Eingriff steht, so dass durch Drehen des Dorns 32 das Magazin 30 rotiert werden kann. Dies geschieht im Betrieb der Verschließvorrichtung automatisch und motorisch angetrieben. Die Schächte 31 sind zu der Außenseite des Magazins 30 in einem durchgehenden Schlitz offen. Durch diesen Schlitz kann ein Hubstück 34 in den jeweiligen Schacht 31 einfahren und einen Verschlusskappenstapel 19 an dem Boden der zuunterst angeordneten Verschlusskappe ergreifen. Über eine Zahnstange 35 und ein oder mehrere mit dieser kooperierende Zahnräder und einen diese(s) antreibenden Antrieb (nicht näher gezeigt) kann das Hubstück 34 in vertikaler Richtung verfahren werden, um so einen Verschlusskappenstapel 19, wie hier in Figur 6 dargestellt, in ein vertikal angeordnetes Zuführrohr 40 zu überführen. Ist auf diese Weise ein Schacht 31 des Magazins 30 vollständig geleert, so wird der Dorn 32 rotiert, bis ein weiterer, mit einem weiteren Verschlusskappenstapel 19 gefüllter Schacht 31 mit dem Zuführrohr 40 fluchtet, so dass ein weiterer Verschlusskappenstapel 19 mit dem Hubstück 34 in das Zuführrohr 40 überführt werden kann. In Fig. 6 ist auch noch eine Hubstückführung 36 zu erkennen. Mit dieser wir das Magazin 30 angehoben. Wenn das Hubstück 34 beginnt, sich, angetrieben durch den motorischen Antrieb, aus einer untersten Position nach oben zu bewegen, dann wird die Hubstückführung 36, an der das Hubstück 34 in der untersten Position anliegt und diese in einer ersten Stellung verriegelt, gelöst. Durch eine hier nicht näher dargestellte Feder wird dann das Magazin 30 auf dem Dorn 32 um einen Verfahrweg von hier ca. 10 mm angehoben und in einen Zentrierer 37 (s. Fig. 7 verrastet). Auf diese Weise kann ein Spiel in dem bzw. können Toleranzen zwischen den Magazin(en) 30 ausgeglichen werden. Fährt das Hubstück 34, wenn z.B. ein Schacht 31 des Magazins 30 vollständig geleert ist, zurück in seine unterste Position, so drückt es gegen die Hubstückführung 36 und wird das Magazin 30 wiederum gegen die Kraft der Feder nach unten zurückgedrückt und aus der Verriegelung mit dem Zentrierer 37 gelöst. Dabei unterstützt ein Druckfederblech 38 (s. Fig. 7), das das Magazin 30 ebenfalls nach unten in eine entriegelte Position drückt. Dann kann z.B. durch Rotation des Magazins 30 ein neuer Schacht 31 mit weiteren Verschlusskappen 10 in Position gedreht werden (eine Rotation des Dorns 32 und damit des Magazins 30 ist nur möglich, wenn das Hubstück 34 sich in seiner untersten Position befindet und so der Zentrierer 37 von dem Magazin 30 gelöst ist und dieses entriegelt).

In Figur 6 auch zu erkennen ist ein der Verschließvorrichtung in einem Probenwagen PW, der auf einer Bahn B selbständig fahren kann, zugeführtes Probengefäß PG, welches an einer Oberseite eine noch zu verschließende Öffnung aufweist. Weiterhin sind Haltearme 50 zu erkennen, deren Funktion nachstehend noch näher beschrieben werden wird.

Figur 7 zeigt noch einmal eine ähnliche Situation wie Figur 6, wobei hier ein mit Verschlusskappenstapeln 19 in mehreren Schächten 31 befülltes Magazin 30 gezeigt ist und auch ein Verschlusskappenstapel 19, der in dem Zuführrohr 40 angeordnet ist. Zu erkennen sind auch das nun in einer untersten Position befindliche, an der Hubstückführung 36 anliegende Hubstück 34 und die Zahnstange 35.

Figur 8 zeigt eine vergrößerte Darstellung eines unteren Abschnittes des Zuführrohrs 40 mit einer Einfädelöffnung für den Verschlusskappenstapel 19. Zu erkennen ist eine unterste Verschlusskappe 10 in dem Verschlusskappenstapel 19, die durch zwei einer ersten Vereinzelung der Verschlusskappen 10 am unteren Ende des Zuführrohrs 40 dienende, schräg angeordnete Federbleche 41 in dem Zuführrohr 40 zurückgehalten wird, so dass bereits hier eine erste Vereinzelung stattfindet. Die schräg zu der Längsrichtung des Zuführrohrs 40 verlaufende Anordnung der Federbleche 41 dient einer besseren Zuführung der Verschlusskappen 10.

Auch ein oberer Abschnitt des Zuführrohrs 40 ist noch einmal vergrößert dargestellt, dies in Figur 9. Dort ist zu erkennen, dass flexible Laschen 42 einseitig mit Schrauben 43 befestigt und schräg zu der Vertikalen gelegen, zu den einander zugewandten Enden nach oben verlaufend, sind. Diese Laschen 42 sorgen für eine Vereinzelung der obersten Verschlusskappe 10 in dem Verschlusskappenstapel 19. Die flexiblen Laschen 42 drücken nämlich auf den umlaufenden Kragen der zweitobersten Verschlusskappe in dem Verschlusskappenstapel 19 und halten diese so zurück. Die oberste Verschlusskappe 10 wird dabei bereits in einem gewissen Maße vom Verschlusskappenstapel 19 gelöst, so dass sie später von dem Verschlussgreifer einfacher ergriffen und vom Verschlusskappenstapel 19 abgehoben werden kann.

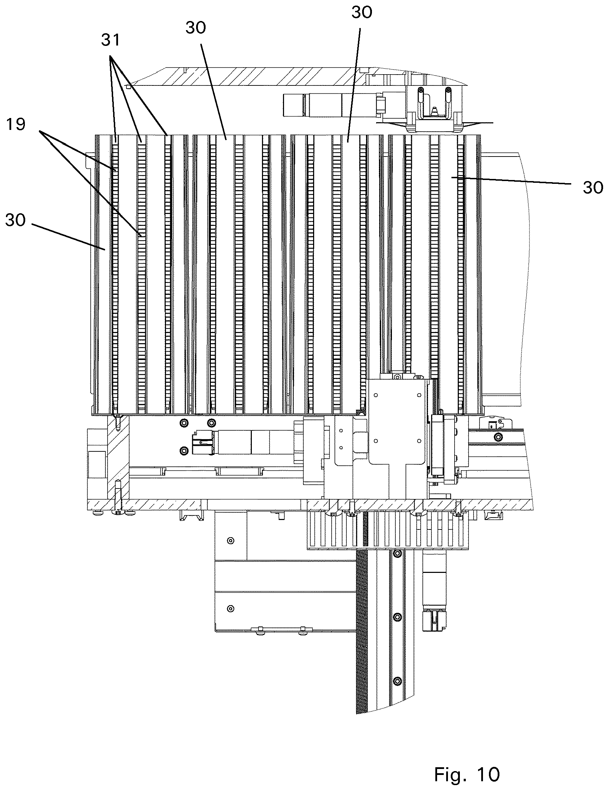

In Figur 10 ist noch einmal vergrößert ein Ausschnitt der Verschließvorrichtung gezeigt, der ein Magazinlager enthält, in dem mehrere Magazine 30, hier vier solche Magazine gezeigt, angeordnet sind. Die dort gelagerten Magazine verfügen jeweils über mehrere Schächte 31 mit darin angeordneten Verschlusskappenstapeln 19. Ist ein Magazin 30 mit Verschlusskappenstapeln 19 vollständig entleert, so kann ein neues Magazin 30 zugeführt und können die Verschlusskappenstapel 19 aus diesem Magazin transportiert und die darin gestapelten Verschlusskappen verarbeitet werden. Die Magazine 30 können insbesondere aus einem leichten Material, zum Beispiel Styropor®, gebildet sein. Ein Überführen der Magazine 30 aus dem Magazinlager in eine Arbeitsposition, in der Verschlusskappenstapel 19 aus dem Magazin 30 in das Zuführrohr 40 überführt werden können, kann dabei manuell oder aber auch automatisch erfolgen.

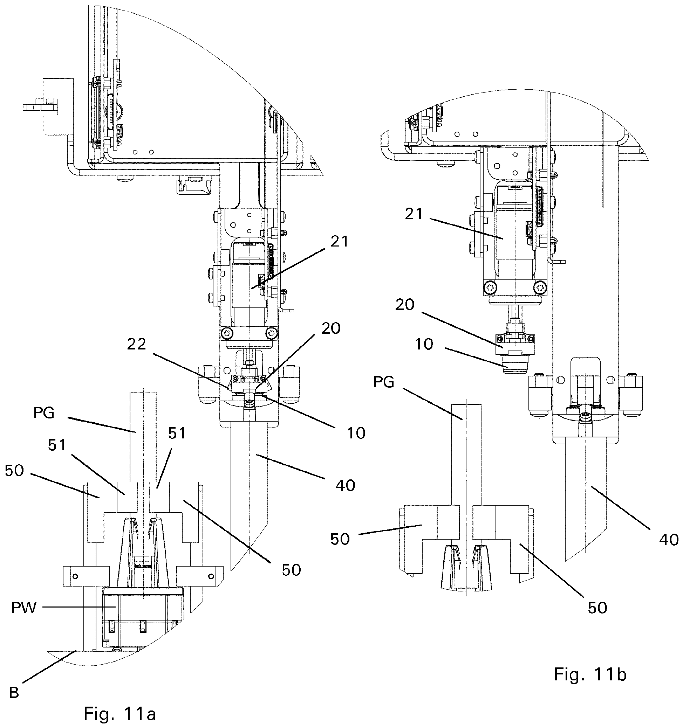

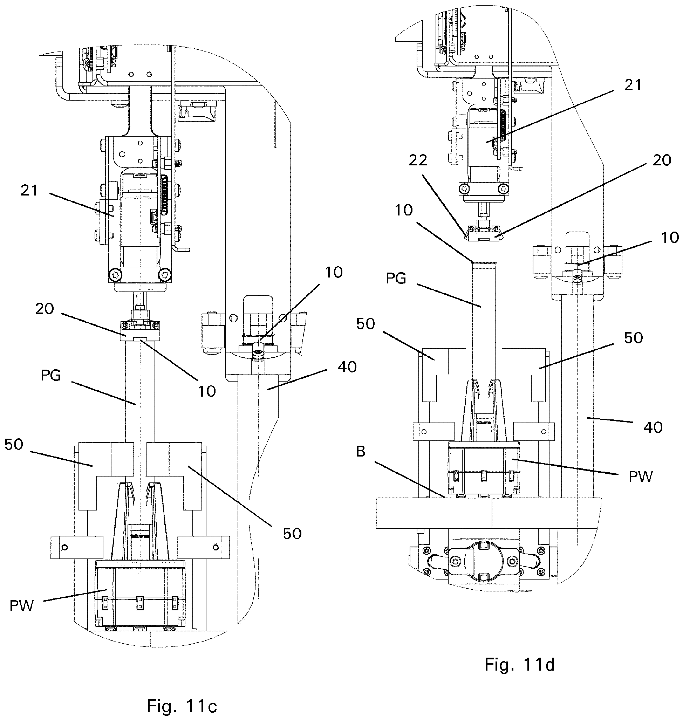

In den Figuren 11a bis e ist schließlich schematisch ein Ablauf zum Verschließen eines Probengefäßes PG dargestellt. Eingangs, wie dies in Figur 11a gezeigt ist, wird ein Probengefäß PG zugeführt und in eine Arbeitsposition verbracht. Dies geschieht hier durch einen selbstfahrenden Probenwagen PW, der in einer Bahn B eigenständig das Probengefäße PG transportiert. Zum Fixieren des Probengefäßes PG sind Haltearme 50 vorgesehen, die mit Haltebacken 51 an dem Probengefäß PG angreifen und dieses in seiner Position fixieren. Diese Haltearme 50 sind in Fig. 11a bereits in eine Halteposition verfahren, so dass sie das Probengefäße PG festhalten.

Der Greiferarm 21 mit dem daran angeordneten Verschlussgreifer 20 ist abgesenkt in eine Position, in der eine oberste Verschlusskappe 10 eines in dem Zuführrohr 40 befindlichen Verschlusskappenstapels ergriffen werden kann. Mit dem Zentrierstück ist der Verschlussgreifer 20 von dem hinteren Ende her in die Verschlusskappe 10 eingefahren und greift auf deren Innenseite an deren Wandung an. So ist die Verschlusskappe 10 zentriert und durch das Anschlagen des umlaufenden Kragens an dem Rand des Zentrierstücks auch richtig positioniert. In der in Figur 11a gezeigten Stellung sind die Klemmbacken 22 noch geöffnet. Diese werden nun geschlossen, und die Verschlusskappe 10 wird von dem Verschlusskappenstapel abgehoben, indem der Greiferarm 21 in vertikaler Richtung aufwärts bewegt wird. Wie in Figur 11b gezeigt, erfolgt dabei auch ein Transport in horizontaler Richtung, um die mit dem Verschlussgreifer 20 erfasste Verschlusskappe 10 zu dem zu verschließenden Probengefäß PG zu überführen. Das Probengefäß PG ist weiterhin durch die Haltearme 50 fixiert.

In Figur 11c ist nun dargestellt, wie durch Absenken des Greiferarms 21 der Verschlussgreifer 20 mit der daran festgelegten Verschlusskappe 10 gegen das Probengefäß PG gepresst wird zum Einbringen der Verschlusskappe 10 in die zu verschließende Öffnung. Noch halten auch die Klemmbacken 22 die Verschlusskappe 10, die nun auf diese Weise dichtend in die Öffnung des Probengefäße PG eingepresst und eingesetzt wird. Hierbei steuern Drucksensoren, bzw. Kraftsensoren an dem Verschlussgreifer 20, bzw. an dem Greiferarm 21, den Fahrweg bzw. die Antriebskraft beim Einsetzen der Verschlusskappe 10 in die Öffnung des Probengefäßes PG. Ist die Verschlusskappe 10 richtig in der Öffnung positioniert und verschließt diese dicht, werden die Klemmbacken 22 durch Absenken der Zugstange geöffnet und wird durch Anheben des Greiferarms 21 der Verschlussgreifer 20 von der Verschlusskappe 10 gelöst, wird insbesondere das Zentrierstück aus der Öffnung am hinteren Ende der Verschlusskappe 10 entlassen. Das Probengefäße PG ist nun dicht verschlossen und kann weiterverarbeitet werden. Entsprechend sind nun die Haltearme 50 zurückgeschwenkt, so dass die Haltebacken 51 das Probengefäß PG freigeben, welches nun mit dem Probenwagen PW weitertransportiert werden kann, insbesondere zu einem Probenarchiv.

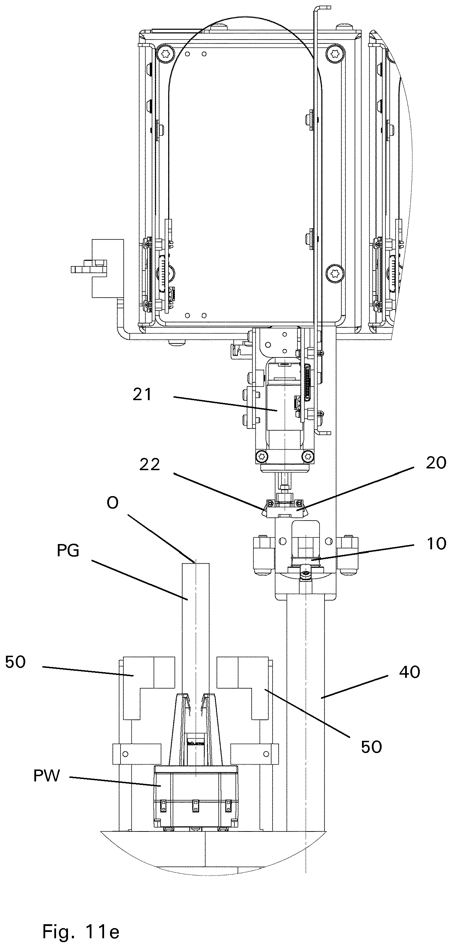

Während bereits ein neues Probengefäße PG mit noch zu verschließender Öffnung O mit einem weiteren Probenwagen PW in die Arbeitsposition verbracht werden kann, wie dies in Figur 11e gezeigt ist, fährt der Greiferarm 21 mit dem Verschlussgreifer 20 zurück zu dem vertikal oberen Ende des Zuführrohrs 40, um dort eine weitere Verschlusskappe 10, die nun die oberste Verschlusskappe des in dem Zuführrohr 40 angeordneten Verschlusskappenstapels bildet, zu übernehmen, wobei der Vorgang zum Verschließen dieses weiteren Probengefäßes PG erneut beginnt, wie in Figur 11a gezeigt.

Aus der vorstehenden Beschreibung ist noch einmal klar geworden, welchen großen Vorteil das erfindungsgemäße System und auch das erfindungsgemäße Verfahren zum automatischen Verschließen von Probengefäßen mit sich bringt. Neben einem automatischen Handling und der Möglichkeit, Probengefäße PG unterschiedlicher Bauart, insbesondere mit unterschiedlichen Öffnungsdurchmessern, sicher zu verschließen, ist hier die große Menge an einheitlichen, stapelbaren Verschlusskappen 10 zu benennen, die in dem System bevorratet und verarbeitet werden können. So kann eine große Zahl von Probengefäßen PG automatisch verschlossen werden, bevor ein manuelles Eingreifen, zum Beispiel für ein Nachbestücken mit Verschlusskappen erforderlich ist.

Dabei soll das vorstehende Ausführungsbeispiel nicht als das erfindungsgemäße System auf diese Ausführungsform einschränkend verstanden werden, sondern dient lediglich der Erläuterung. Ein erfindungsgemäßes System in seiner allgemeinen Ausprägung wird ebenso wie ein erfindungsgemäßes Verfahren in den nachstehenden Ansprüchen definiert.

### Bezugszeichenliste

- 10: Verschlusskappe
- 11: Außenseite
- 12: Innenseite
- 13: hinteres Ende
- 14: vorderes Ende
- 15: Stufe
- 16: Stufe
- 17: Stufe
- 18: Kragen
- 19: Verschlusskappenstapel
- 20: Verschlussgreifer
- 21: Greiferarm
- 22: Klemmbacke
- 23: Zentrierstück
- 24: Achse
- 25: Ende
- 26: Zugstück
- 27: Zugstange
- 30: Magazin
- 31: Schacht
- 32: Dorn
- 33: Mitnehmerstift
- 34: Hubstück
- 35: Zahnstange
- 36: Hubstückführung
- 37: Zentrierer
- 38: Druckfederblech
- 40: Zuführrohr
- 41: Federblech
- 42: flexible Lasche
- 43: Schraube
- 50: Haltearm
- 51: Haltebacke
- B: Bahn
- O: Öffnung
- PG: Probengefäß
- PW: Probenwagen

## Patentansprüche

1. System zum automatischen Verschließen von Probengefäßen (PG), insbesondere von Probengefäßen (PG) mit medizinischen Laborproben, mit
i. einer Mehrzahl von gleich geformten, stapelbaren Verschlusskappen (10), die eine konvex geformte Außenseite (11) und eine konkav geformte Innenseite (12) aufweisen und die derart in wenigstens einem Verschlusskappenstapel (19) gestapelt sind, dass eine obere Verschlusskappe (10) in dem Verschlusskappenstapel (19) mit ihrer konvex geformten Außenseite (11) an der konkav geformten Innenseite (12) einer in dem Verschlusskappenstapel (19) unmittelbar darunter liegenden unteren Verschlusskappe (10) angreift,
ii. einem Verschlussgreifer (20) zum Erfassen einer obersten Verschlusskappe (10) aus dem wenigstens einen Verschlusskappenstapel (19), zum Überführen der ergriffenen Verschlusskappe (10) zu dem zu verschließenden Probengefäß (PG) und zum Einbringen der ergriffenen Verschlusskappe (10) in eine Öffnung (O) des Probengefäßes (PG) zum dichten Verschließen der Öffnung (O),
wobei der Verschlussgreifer (20) ein Zentrierstück (23) aufweist, das in eine Verschlusskappe (10) derart einführbar ist, dass es an der konkav geformten Innenseite (12) der Verschlusskappe (10) anliegt.

2. System nach Anspruch 1, **dadurch gekennzeichnet, dass** die Verschlusskappen (10) aus einer Folie durch Umformen gebildet sind.

3. System nach einem der vorhergehenden Ansprüche, **dadurch gekennzeichnet, dass** die Verschlusskappen (10) jeweils an einem ein offenes Ende der konkaven Innenseite (12) abschließenden Rand einen nach außen weisenden Kragen (18) aufweisen und dass das Zentrierstück (23) eine Anschlagfläche aufweist, an der, wenn das Zentrierstück (23) in die konkave Innenseite (12) der Verschlusskappe (10) eingeführt wird, der Kragen (18) anliegt.

4. System nach einem der vorhergehenden Ansprüche, **dadurch gekennzeichnet, dass** der Verschlussgreifer (20) wenigstens ein zwischen einer Freigabeposition und einer Halteposition, in der es eine ergriffene Verschlusskappe (10) von der Außenseite (11) her gegen das Zentrierstück (23) drückt und verklemmt, bewegbares Klemmteil (22) aufweist.

5. System nach Anspruch 4, **gekennzeichnet durch** zwei einander diametral gegenüberliegende Klemmteile (22).

6. System nach einem der vorhergehenden Ansprüche, **gekennzeichnet durch** Haltemittel (50, 51) zum fixierenden Halten des Probengefäßes (PG) in einer Arbeitsposition.

7. System nach einem der vorhergehenden Ansprüche, **gekennzeichnet durch** wenigstens ein mindestens zwei Verschlusskappenstapel (19) fassendes Magazin (30), welches in einer solchen Weise verlagerbar ist, dass wählbar einer der in dem Magazin (30) vorhandenen Verschlusskappenstapel (19) in eine Zuführposition verbringbar ist, aus der heraus eine oberste Verschlusskappe (10) des in die Zuführposition verbrachten Verschlusskappenstapels (19) in einen Arbeitsbereich des Verschlussgreifers (20) verbringbar ist.

8. System nach Anspruch 7, **gekennzeichnet durch** ein ein erstes und ein zweites Ende aufweisendes vertikales Zuführrohr (40), welches mit einem ersten, unteren Ende im Bereich des Magazins (30) so angeordnet ist, dass ein durch Verlagern des Magazins (30) entsprechend positionierter Verschlusskappenstapel (19) in das Zuführrohr (40) einbringbar ist, und welches mit einem zweiten Ende in dem Arbeitsbereich des Verschlussgreifers (20) mündet.

9. System nach einem der vorhergehenden Ansprüche, **gekennzeichnet durch** Hubmittel (34) zum vertikalen Anheben des wenigstens einen Verschlusskappenstapels (19).

10. System nach einem der vorhergehenden Ansprüche, **gekennzeichnet durch** Vereinzelungsmittel (42) zum Vereinzeln von Verschlusskappen (10), insbesondere einer obersten Verschlusskappe (10), von den restlichen Verschlusskappen (10) des Verschlusskappenstapels (19).

11. System nach einem der vorhergehenden Ansprüche, **dadurch gekennzeichnet, dass** die Verschlusskappen (10) ausgehend von einem ersten, hinteren Ende (13) hin zu einem zweiten, vorderen Ende (14), das beim Verschließen des Probengefäßes (PG) in die zu verschließende Öffnung (O) eingeführt wird, einen sich, insbesondere gestuft, verjüngenden Durchmesser aufweist.

12. Verfahren zum automatischen Verschließen von Probengefäßen, insbesondere von Probengefäßen mit medizinischen Laborproben, mit folgenden Schritten:
i. Bereitstellen wenigstens eines aus einer Mehrzahl von gleich geformten, stapelbaren Verschlusskappen, die eine konvex geformte Außenseite und eine konkav geformte Innenseite aufweisen, gebildeten Verschlusskappenstapels, wobei in dem Verschlusskappenstapel eine obere Verschlusskappe mit ihrer konvex geformten Außenseite an der konkav geformten Innenseite einer unmittelbar darunter liegenden unteren Verschlusskappe angreift;
ii. Erfassen einer obersten Verschlusskappe des Verschlusskappenstapels mit einem ein Zentrierstück aufweisenden Verschlussgreifer, wobei das Zentrierstück in die konkav geformte Innenseite der obersten Verschlusskappe eingeführt wird, bis sie an der Innenseite anliegt;
iii. Überführen der ergriffenen Verschlusskappe von dem Verschlusskappenstapel zu dem zu verschließenden Probengefäß mit dem Verschlussgreifer;
iv. Einführen der Verschlusskappe in die und Festlegen der Verschlusskappe in der zu verschließenden Öffnung des Probengefäßes, wobei die Verschlusskappe mit dem Zentrierstück in die Öffnung eingedrückt wird;
v. Lösen des Verschlussgreifers von der in der Öffnung des Probengefäßes platzierten Verschlusskappe.

13. Verfahren nach Anspruch 12, **dadurch gekennzeichnet, dass** der Verschlusskappenstapel angehoben wird, bis die oberste Verschlusskappe in dem Verschlusskappenstapel in einer Übergabeposition in einem Arbeitsbereich des Verschlussgreifers angeordnet ist.

14. Verfahren nach einem der Ansprüche 12 oder 13, **dadurch gekennzeichnet, dass** die oberste Verschlusskappe des Verschlusskappenstapels vor dem Ergreifen mit dem Verschlussgreifer von dem Verschlusskappenstapel gelöst und vereinzelt wird.

## Claims

1. A system for automatically closing sample containers (PG), in particular sample containers (PG) with medical laboratory samples, comprising
i. a plurality of identically shaped stackable closure caps (10) which have a convex-shaped outer side (11) and a concave-shaped inner side (12) and which are thus stacked in at least one stack of closure caps (19) in such a way that an upper closure cap (10) in the stack of closure caps (19) engages with its convex-shaped outer side (11) on the concave-shaped inner side (12) of a lower closure cap (10) lying directly beneath it in the stack of closure caps (19),
ii. a closing gripper (20) for gripping an uppermost closure cap (10) from said at least one stack of closure caps (19), for transferring the gripped sealing cap (10) to the sample container (PG) to be sealed and for inserting the gripped closure cap (10) into an opening (0) of the sample container (PG) for closing the opening (0),
the closure gripper (20) having a centring piece (23) which can be inserted into a closure cap (10) in such a way that it rests against the concave-shaped inner side (12) of the closure cap (10).

2. The system according to claim 1, **characterised in that** the closure caps (10) are produced from a film by a forming process.

3. A system according to one of the preceding claims, **characterised in that** the closure caps (10) each have an outwardly pointing collar (18) at an edge terminating an open end of the concave inner side (12) and **in that** the centering piece (23) has a stop face on which the collar (18) abuts, when the centering piece (23) is inserted into the concave inner side (12) of the closure cap (10).

4. The system according to one of the preceding claims, **characterised in that** the closure gripper (20) has at least one clamping part (22) movable between a release position and a holding position, in which it presses and clamps a gripped closure cap (10) from the outside (11) against the centering piece (23).

5. The system according to Claim 4, **characterised by** two diametrically opposed clamping parts (22).

6. The system according to one of the preceding claims, **characterised by** holding means (50, 51) for fixingly holding the sample container (PG) in a working position.

7. The system according to one of the preceding claims, **characterised by** at least one magazine (30) containing at least two stacks of closure caps (19), which is displaceable in such a way that that one of the stacks of closure caps (19) present in the magazine (30) can be selectively moved into a feed position, from which an uppermost closure cap (10) of the stack of closure caps (19) brought into the feed position can be moved into a working area of the closure gripper (20).

8. The system according to claim 7, characterszed by a vertical feed tube (40) having a first and a second end, which is arranged with a first, lower end in the region of the magazine (30) such in that a stack of closure caps (19) which is positioned correspondingly by displacing the magazine (30) can be introduced into the feed tube (40) and which opens with a second end in the working area of the closure gripper (20).

9. The system according to one of the preceding claims, **characterised by** lifting means (34) for vertically lifting said at least one stack of closure caps (19).

10. The system according to one of the preceding claims, **characterised by** separating means (42) for separating closure caps (10), in particular an uppermost closure cap (10), from the remaining closure caps (10) of the stack of closure caps (19).

11. The system according to one of the preceding claims, **characterised in that** the closure caps (10), starting from a first rear end (13) towards a second front end (14) which is inserted into the opening (0) to be closed when the sample container (PG) is closed, have a tapered diameter, in particular a stepped diameter.

12. A method for automatically closing sample containers, in particular sample containers with medical laboratory samples, comprising the following steps:
i. providing at least one stackable closure cap stack formed from a plurality of identically shaped stackable closure caps having a convex-shaped outer side and a concave-shaped inner side, wherein, in the stack of closure caps, an upper closure cap with its convex-shaped outer side engages the concave-shaped inner side of an immediately underlying lower closure cap;
ii. Detecting an uppermost closure cap of a stack of closure caps with a closure gripper having a centering piece, wherein the centering piece is inserted into the concave-shaped inner side of the uppermost closure cap until it abuts the inner side;
iii. Transferring the gripped closure cap from the stack of closure caps to the sample container to be sealed using the closing gripper;
iv. Insert the closure cap into the sample container and secure the closure cap in the opening to be closed, whereby the closure cap with the centering piece is pressed into the opening;
v. Loosening the closure gripper from the closure cap placed in the opening of the sample container.

13. The method according to claim 12, **characterised in that** the stack of closure caps is raised, until the topmost closure cap in the stack of closure caps is arranged in a transfer position in a working area of the closure gripper.

14. The method according to one of claims 12 or 13, **characterised in that** the uppermost closure cap of the stack of closure caps is detached from the stack of closure caps and separated before it is gripped by the closure gripper.

## Revendications

1. Système de fermeture automatique de tubes d'essai (PG), en particulier de tubes d'essai (PG) avec des échantillons de laboratoire médical, comprenant
i. une pluralité de capuchons de fermeture empilables de forme identique (10) ayant un côté extérieur de forme convexe (11) et un côté intérieur de forme concave (12) et qui sont ainsi empilés dans au moins une pile de capuchons de fermeture (19) ainsi une façon un capuchon de fermeture supérieur (10) dans la pile de capuchons de fermeture (19) s'engage avec son côté extérieur de forme convexe (11) sur le côté intérieur de forme concave (12) d'un capuchon de fermeture inférieur (10) situé directement sous celui-ci dans la pile de capuchons de fermeture (19),
ii. une pince de fermeture (20) pour saisir un capuchon de fermeture supérieur (10) depuis ladite au moins une pile de capuchons de fermeture (19), pour transférer le capuchon de fermeture saisi (10) vers le tube d'essai (PG) à fermer et pour insérer le capuchon de fermeture saisi (10) dans une ouverture (0) du tube d'essai (PG) pour fermer l'ouverture (0),
la pince de fermeture (20) comporte une pièce de centrage (23) qui peut être insérée dans un capuchon de fermeture (10) de telle sorte qu'elle repose contre la face interne de forme concave (12) du capuchon de fermeture (10).

2. Système selon la revendication 1, **caractérisé en ce que** les capuchons de fermeture (10) sont fabriqués à partir d'un film par un procédé de formage.

3. Système selon l'une des revendications précédentes, **caractérisé en ce que** les capuchons de fermeture (10) présentent chacun un collier (18) dirigé vers l'extérieur au niveau d'un bord se terminant par une extrémité ouverte du côté interne concave (12). et **en ce que** la pièce de centrage (23) présente une face de butée sur laquelle vient s'appuyer le collier (18) lorsque la pièce de centrage (23) est insérée dans le côté interne concave (12) du capuchon de fermeture (10).

4. Système selon l'une des revendications précédentes, **caractérisé en ce que** la pince de fermeture (20) comporte au moins une partie de serrage (22) pouvant être déplacée entre une position de libération et une position de maintien, dans laquelle elle comprime et serre un capuchon de fermeture saisi (10) de l'extérieur (11) contre la pièce de centrage (23).

5. Système selon la revendication 4, **caractérisé par** deux parties de serrage (22) diamétralement opposées.

6. Système selon l'une des revendications précédentes, **caractérisé par** des moyens de maintien (50, 51) destinés à maintenir par fixation le tube d'essai (PG) dans une position de travail.

7. Système selon l'une des revendications précédentes, **caractérisé par** au moins un magasin (30) contenant au moins deux piles de capuchons de fermeture (19) pouvant être déplacés de telle sorte que l'une des piles de capuchons de fermeture (19) présent dans le magasin (30) peut être sélectivement déplacée dans une position d'alimentation, à partir de laquelle un capuchon de fermeture supérieure (10) de la pile de capsules de fermeture (19) amenée dans la position d'alimentation peut être déplacé dans une zone de travail de la pince de fermeture (20).

8. Système selon la revendication 7, **caractérisé par** un tube d'alimentation vertical (40) ayant une première extrémité et une seconde extrémité, qui est agencée avec une première extrémité inférieure dans la zone du magasin (30), de sorte qu'une pile de capuchons de fermeture (19) qui est positionnée de manière correspondante en déplaçant le magasin (30) peut être introduite dans le tube d'alimentation (40) et qui débouche avec une seconde extrémité dans la zone de travail de la pince de fermeture (20).

9. Système selon l'une des revendications précédentes, **caractérisé par** des moyens de levage (34) pour lever verticalement ladite au moins une pile de capuchons de fermeture (19).

10. Système selon l'une des revendications précédentes, **caractérisé par** des moyens de séparation (42) pour séparer les capuchons de fermeture (10), en particulier un capuchon de fermeture le plus haut (10), à partir des capuchons de fermeture restants (10) de la pile de capuchons de fermeture (19).

11. Système selon l'une des revendications précédentes, **caractérisé en ce que** les capuchons de fermeture (10) partent d'une première extrémité arrière (13) vers une seconde extrémité avant (14) qui est insérée dans l'ouverture (0) pour être fermée lorsque le tube d'essai (PG) est fermé et présente un diamètre conique, en particulier un diamètre en gradins.

12. Procédé de fermeture automatique de tubes d'essai, en particulier de tubes d'essai avec des échantillons de laboratoire médical, comprenant les phases suivantes:
i. Prévoir au moins une pile de capuchons de fermeture empilables formés à partir d'une pluralité de capuchons de fermeture empilables de formes identiques ayant un côté externe de forme convexe et un côté interne de forme concave, dans lequel, dans la pile de capuchons de fermeture, un capuchon de fermeture supérieur avec son côté externe de forme convexe engrène avec le côté interne de forme concave d'un capuchon de fermeture inférieur immédiatement sous-jacent;
ii. Détecter un capuchon de fermeture le plus haut d'une pile de capuchons de fermeture avec une pince de fermeture ayant une pièce de centrage, dans lequel la pièce de centrage est insérée dans le côté interne de forme concave du capuchon de fermeture le plus haut jusqu'à ce qu'elle bute contre le côté interne;
iii. Transférer le capuchon de fermeture saisi de la pile de capuchons de fermeture sur le tube d'essai à fermer à l'aide de la pince de fermeture;
iv. Insérer le capuchon de fermeture dans le tube d'essai et fixer le capuchon de fermeture dans l'ouverture à fermer, moyennant quoi le capuchon de fermeture avec la pièce de centrage est enfoncé dans l'ouverture;
v. Desserrer la pince de fermeture du capuchon de fermeture placé dans l'ouverture du tube d'essai.

13. Procédé selon la revendication 12, **caractérisé en ce que** la pile de capuchons de fermeture est surélevée, jusqu'à ce que le capuchon de fermeture le plus haut dans la pile de capuchons de fermeture soit disposé dans une position de transfert dans une zone de travail de la pince de fermeture.

14. Procédé selon l'une des revendications 12 ou 13, **caractérisé en ce que** le capuchon de fermeture le plus haut de la pile de capuchons de fermeture est détaché de la pile de capuchons de fermeture et séparé avant qu'il ne soit saisi par la pince de fermeture.
